# EUROPÄISCHE PATENTSCHRIFT

(11) **EP 1 067 304 B1**
(45) Veröffentlichungstag und Bekanntmachung des Hinweises auf die Patenterteilung: **15.09.2004**
(21) Anmeldenummer: 00113514.4
(22) Anmeldetag: 26.06.2000
(51) Int. Cl.: F16D 55/224, F16D 65/092

(54) **Scheibenbremse und Bremsbelag dafür**
Disc brake and brake lining therefor
Frein à disque et sa garniture de frein

(30) Priorität: 06.07.1999 DE 19931024
(43) Veröffentlichungstag der Anmeldung: 10.01.2001
(73) Patentinhaber: LUCAS INDUSTRIES PUBLIC LIMITED COMPANY, Solihull B90 4LA (GB)
(72) Erfinder: Madzgalla, Frank, 56070 Koblenz (DE); Krautkremer, Hubert, 56218 Mülheim-Kärlich (DE); Schroeter, Christian, 53489 Sinzig (DE); Zenzen, Guido, 56290 Macken (DE)
(74) Vertreter: von Hellfeld, Axel, Dr. Dipl.-Phys.

(56) Entgegenhaltungen:
- EP-A- 0 989 320
- WO-A-97/13078
- DE-A- 3 543 511
- DE-A- 3 708 699
- DE-A- 4 208 003
- DE-B- 1 202 075
- US-A- 3 390 744
- US-A- 3 486 589

## Beschreibung

Die Erfindung betrifft eine Scheibenbremse mit einem Bremsträger, der an einem Fahrzeug befestigbar ist, einem Schwimmrahmen, der eine Bremsscheibe der Bremse übergreift und am Bremsträger geführt ist, zumindest einem Bremsbacken, der im Einbauzustand der Bremse auf der fahrzeugäußeren Seite der Bremsscheibe am Schwimmrahmen abgestützt ist, zumindest einem weiteren Bremsbacken, der im Einbauzustand der Bremse auf der fahrzeuginneren Seite der Bremsscheibe am Bremsträger gegen Bremskräfte abgestützt ist und zumindest einem Betätigungskolben, der am Schwimmrahmen angeordnet ist. Die Erfindung betrifft auch einen Bremsbelag für eine solche Scheibenbremse.

Eine Scheibenbremse der eingangs genannten Art ist aus der EP 0 412 541 B1 und der EP 0 480 366 A1 bekannt. In beiden Fällen hat dabei die Scheibenbremse die Besonderheit, daß auf jeder Seite der Bremsscheibe zwei voneinander getrennte Bremsbacken angeordnet sind, und daß zumindest ein Paar Betätigungskolben vorgesehen ist, die am Schwimmrahmen symmetrisch in bezug auf eine axiale Mittelebene des Bremsträgers angeordnet sind. Die Erfindung betrifft insbesondere eine Verbesserung dieser bekannten Teilbelag-Scheibenbremse hinsichtlich einer einfachen und zuverlässigen Montage der Bremsbacken. Sie ist jedoch ganz allgemein auf Scheibenbremsen der eingangs genannten Art anwendbar.

Die Befestigung der im Einbauzustand der Bremse auf der fahrzeugäußeren Seite der Bremsscheibe angeordneten Bremsbacken am Schwimmrahmen ist bei den Teilbelag-Scheibenbremsen des Standes der Technik problematisch. Insbesondere bei starken Bremsungen werden die Befestigungen der Bremsbacken erheblichen Belastungen ausgesetzt. Dies kann dazu führen daß sich die Bremsbacken lockern. Beispielsweise sind die im Einbauzustand der Bremse auf der fahrzeugäußeren Seite der Bremsscheibe angeordneten Bremsbeläge bei der Scheibenbremse, wie sie in der EP 0 480 366 A1 beschrieben ist, an Stiften abgestützt, welche in Bohrungen des Schwimmrahmens eingepreßt werden. Wird die Fahrzeugbremse über längere Zeit im sog. 1g-Bereich betätigt, d. h. so stark betätigt, daß das Fahrzeug mit einer Verzögerung von 1g, der Erdbeschleunigung von etwa 10 m/s², abgebremst ist, so können sich diese Stifte lockern. Hierdurch wird die Stabilität der Anordnung der Bremsbacken stark beeinträchtigt.

Aus der DE 33 46 479 A1 ist eine Scheibenbremse mit einem Bremsträger, einem Schwimmrahmen, mehreren Bremsbacken und einem Betätigungskolben bekannt. Ein auf der fahrzeugäußeren Seite angeordneter Bremsbacken ist auf seiner von einer Bremsscheibe abgekehrten Seite mit Vorsprüngen in Gestalt von Rippen versehen. Der Schwimmrahmen der Scheibenbremse weist komplementäre Vertiefungen in Gestalt von Nuten auf.

Andere Scheibenbremsen sind aus den Druckschriften EP 0 989 320 A, WO 97 13078 A und DE 42 08 003 A bekannt.

Die Druckschriften DE 35 43 511 A, US 3 486 589 A, DE 37 08 699 A zeigen ferner Befestigungsvorrichtungen für Bremsbeläge.

Die in der US 3 390 744 dargestellte Scheibenbremse weist ein Gehäuse mit einem Paar von im Umfang beabstandeten V-förmigen Aussparungen, welche in Richtung auf eine axiale Seite einer Bremsscheibe zeigen, und Bremsbacken mit Ansätzen auf, die in den Aussparungen aufgenommen werden. Die V-förmigen Aussparungen haben gegenüberliegende Seitenflächen, die in einem 65° Winkel zueinander stehen. Abgenutzte Bremsbacken können durch eine Öffnung im Gehäuse entnommen und ausgetauscht werden.

Die DE 1202 075 B zeigt eine Bremsbacke für eine Teilbelag-Scheibenbremse mit einem die Bremsscheibe von außen umgreifenden U-förmigen Gehäuse, in dessen beiden Schenkeln hydraulisch betätigte Kolben geführt sind, die die mit diesen auswechselbar verbundenen, aus Reibbelag und Trägerplatte bestehenden Bremsbacken gegen die Bremsscheibe pressen. Diese Bremsbacke weist eine Trägerplatte mit für den Eingriff in Nuten in einer Stirnfläche eines Kolbens einer Teilbelag-Scheibenbremse bestimmten parallelen Führungsleisten auf. Alternativ kann die Trägerplatte Nuten für den Eingriff in einen mit Führungsleisten versehenen Kolben der Scheibenbremse aufweisen.

Es ist Aufgabe der Erfindung, die Abstützung bzw. Befestigung der Bremsbacken, die im Einbauzustand der Bremse auf der fahrzeugäußeren Seite der Bremsscheibe angeordnet sind, sicherer und zuverlässiger zu gestalten. Weiterhin ist es Aufgabe der Erfindung, einen einfachen und funktionszuverlässigen Einbau des Bremsbackens zu ermöglichen.

Erfindungsgemäß wird die Aufgabe mit einer Scheibenbremse gemäß Anspruch 1 bzw. Anspruch 2 gelöst.

Der in dem Anspruch 10 beschriebene Bremsbacken, bzw. die Verwendung des Bremsbackens gemäß Anspruch 11, entspricht dieser erfindungsgemäßen Lösung.

Bevorzugte Ausgestaltung der Erfindung sind in den abhängigen Ansprüchen beschieben.

So sind die Abmessungen der Bremse bevorzugt so bemessen, daß der Einbau eines neuen (ausgewechselten) Bremsbackens nur möglich ist, wenn der genannte Vorsprung in die Vertiefung bzw. Nut eingreift. Eine bevorzugte Ausgestaltung der Erfindung sieht vor, daß die beiden Vertiefungen stufenförmig so angeordnet sind, daß der Vorsprung beim Einbau in die weitere Vertiefung einrastet, so daß der Monteur sich der positionsgenauen Lage der Bremsbacke sicher sein kann. Dabei ist die weitere Vertiefung bevorzugt als Bohrung ausgebildet. In die Bohrung greift der Vorsprung in der Einbaulage des Bremsbackens ein, und zwar bevorzugt paßgenau, so daß durch den Eingriff des Vorsprunges in die zusätzliche Vertiefung erstens der sichere und ortsgenaue Sitz des Bremsbackens für den Monteur erkennbar ist und zweitens der Bremsbacken durch Anlage des Vorsprunges an den Wänden der weiteren Vertiefung zusätzlich zu der gegebenenfalls weiterhin vorgesehenen Abstützung gesichert ist.

Es ist vorteilhaft, wenn die bevorzugt als Nut ausgeformte Vertiefung in der Einbaurichtung bzw. der Richtung, in der der Vorsprung in der Nut führbar ist, nach der Vertiefung an einem Anschlag endet. Hierdurch merkt der Monteur, der die Bremsbakken einbaut, an welcher Stelle der Nut sich die weitere Vertiefung befindet und zu welchem Zeitpunkt beim Einführen des Bremsbackens also ein entsprechender Druck des Bremsbackens auf den Schwimmrahmen zu ausgeübt werden muß, damit der Vorsprung in der Aussparung einrastet.

Es ist ebenfalls vorteilhaft, wenn die Höhe des Vorsprungs und der Abstand zwischen dem Schwimmrahmen und der Bremsscheibe so bemessen sind, daß der Abstand zwischen der zur Bremsscheibe weisenden Oberfläche des ersten Bremsbackens und der Bremsscheibe während eines Entlangführens des Vorsprungs in der Nut bzw. der Nut über den Vorsprung kleiner als die Tiefe der Nut ist. Dadurch wird es nämlich unmöglich, daß der Bremsbacken in den Zwischenraum zwischen dem Schwimmrahmen und der Bremsscheibe eingeführt wird, ohne daß der Vorsprung in der Nut entlang gleitet, da kein Platz ist, den Vorsprung neben der Nut auf der Oberfläche des Schwimmrahmens entlang zu führen. Bevorzugt ist bei der ersten Alternative der Vorsprung in dem Bremsbacken möglichst weit von dem Bereich des ersten Bremsbackens beabstandet, der während des Einbaus des Bremsbackens angefaßt wird. Dies kann z. B. bedeuten, daß sich der Vorsprung in der Nähe der unteren Kante des Bremsbackens befindet, da der Bremsbacken beim Einbau in der Nähe der oberen Kante angefaßt wird. Die Begriffe "oben" und "unten" werden hier im Sinne einer vereinfachten Darstellung so verstanden, daß die Bremse mit vertikal verlaufender Mittelebene eingebaut ist. In diesem Falle beziehen sich die Begriffe "oben" und "unten" auf die Vertikale. Für den Fachmann versteht sich, daß Bremsen auch anders eingebaut werden, nämlich nicht so, daß ihre Mittelebene vertikal verläuft. Es versteht sich, daß die Begriffe "oben" und "unten" für solche Fälle analog in dem Sinne zu verstehen sind, daß "oben" die Bedeutung hat von "radial außen" und "unten" die Bedeutung von "radial innen".

Die vorstehend genannte Anordnung des Vorsprunges in der Nähe der unteren Kante des Bremsbackens hat zum einen den Vorteil, daß sich daraus ergibt, daß die Nut besonders lang gestaltet werden kann, der Bremsbacken also nahezu während des gesamten Vorgangs des Einführens in die Bremse in der Nut geführt wird. Zum anderen ist dieses Merkmal vorteilhaft, wenn die Bremsbakken an den Schwimmrahmen angeklebt werden, um in bezug auf Schwingungen mit diesem eine Koppelmasse zu bilden. In diesem Fall ist der Bremsbacken in der Regel auf seiner anzuklebenden Seite, also auf der Rückseite, bereits mit einer Klebeschicht versehen, welche zum Transport mit einer Schutzfolie abgedeckt ist. Unmittelbar vor dem Einbau der Bremsbacken wird die Schutzfolie abgezogen und die klebende Schicht freigelegt. Beim Einführen der Bremsbacken ist es nun möglichst zu vermeiden, daß die Klebeschicht den Rahmen berührt, bevor die Endstellung erreicht wird. Durch die Maximierung des Abstands von der Stelle, an der der Bremsbacken angefaßt wird zum Vorsprung wird eine möglichst geringe Verkippung des Bremsbackens und eine stabile Führung in der Nut gewährleistet, so daß eine Berührung der klebenden Rückseite des Bremsbackens mit dem Schwimmrahmen eher unterbleibt.

Nachfolgend wird ein Ausführungsbeispiel der Erfindung anhand schematischer Zeichnungen näher beschrieben. Es zeigt:
- Figur 1: eine Draufsicht der Scheibenbremse mit den erfindungsgemäßen Bremsbacken;
- Figur 2: eine Ansicht des Schwimmrahmens mit den auf der fahrzeugäußeren Seite der Bremsscheibe, in Figur 1 also links angeordneten Bremsbacken;
- Figur 3: den Schnitt A-A von Figur 1;
- Figur 4: einen Teilschnitt durch die Bremse ähnlich der Figur 3 während des Einführens des Bremsbackens in die Bremse;
- Figur 5: den Schnitt B-B von Figur 1.

Die in den Figuren dargestellte Scheibenbremse basiert auf der in der EP 0 412 541 B1 und der EP 0 480 366 A1 beschriebenen Scheibenbremse, und ihre Wirkungsweise ist in diesen Schriften ausführlich dargestellt.

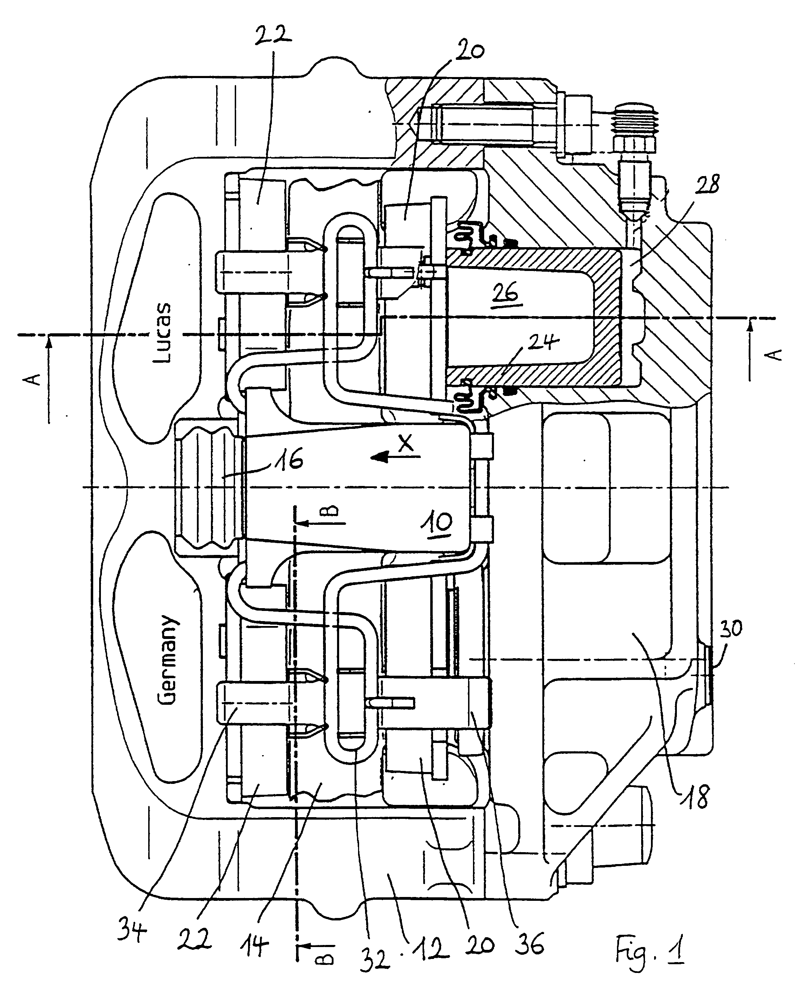

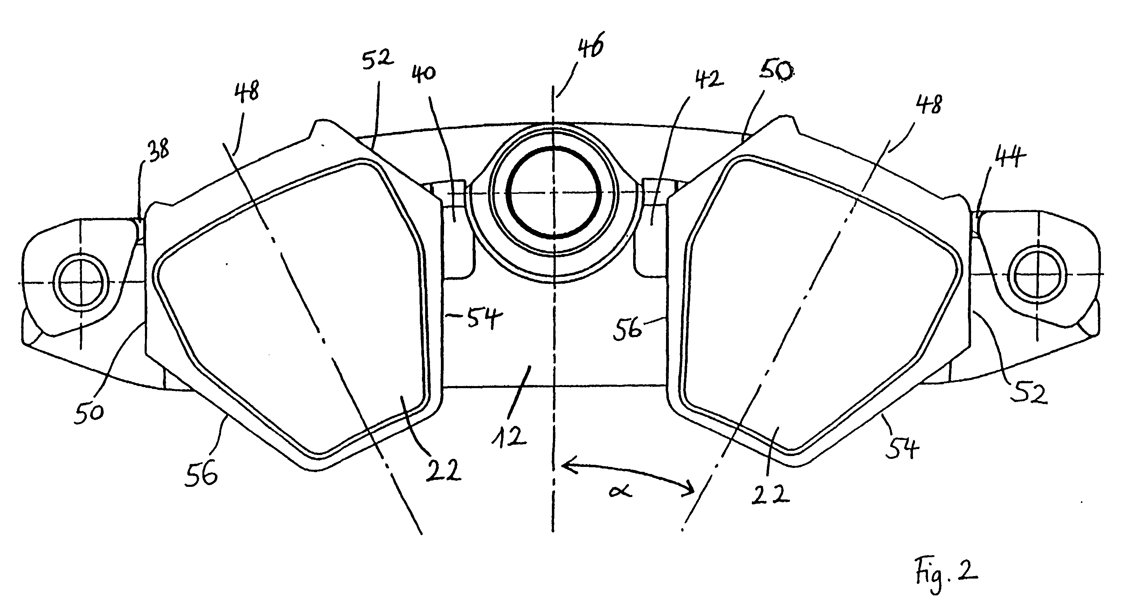

Wie in Figur 1 zu sehen, wird das Gerüst der Scheibenbremse durch einen Bremsträger 10, der an einem Fahrzeug befestigt wird, und einen Schwimmrahmen 12 gebildet, der eine Bremsscheibe 14 der Bremse übergreift. Der Schwimmrahmen ist über einen abgedichteten Führungsbolzen 16 auf dem Bremsträger 10 geführt und mit dem Gehäuse 18 verbunden.

In dem Bremsträger 10 werden zwei im Einbauzustand der Bremse auf der fahrzeuginneren Seite der Bremsscheibe 16 angeordnete ("innere") Bremsbacken 20 geführt. In dem Schwimmrahmen 12 werden zwei im Einbauzustand der Bremse auf der fahrzeugäußeren Seite der Bremsscheibe 14 angeordnete ("äußere") Bremsbacken 22 aufgenommen.

Die Betätigung der Bremse erfolgt mittels zweier Kolben 24 (in Figur 1 nur einer oben im einzelnen gezeigt), welche zur Material- und Gewichtseinsparung einen Hohlraum 26 haben und in einem Zylinder in bekannter Weise geführt sind. In einem Druckraum 28 wird über einen Einlaß 30 mittels einer Hydraulikflüssigkeit ein Bremsdruck erzeugt, der in Figur 1 die beiden Kolben nach links bewegt. Dabei kommen die Bremsbacken 20 in Anlage an die Bremsscheibe 14. Wegen des Grundsatzes "actio gleich reactio" bewegt sich entsprechend der Bewegung des Kolbens 24 nach links das Gehäuse 18 und der gesamte Schwimmrahmen 12 in Figur 1 nach rechts, wodurch die Bremsbacken 22 in Anlage an die äußere Seite der Bremsscheibe 10 gebracht werden.

Um ein Poltern, Klappern oder Quietschen der inneren und äußeren Bremsbacken 20 bzw. 22 in der Ruhestellung und beim Bremsvorgang zu verhindern, ist eine aus mehreren Teilen bestehende Niederhaltefeder 32 vorgesehen, die die Bremsbacken 20 bzw. 22 mit Federarmen 34 und 36 auf die ihnen zugewiesenen Führungen bzw. weiter unten beschriebenen Abstützungen drückt. Zusätzlich drücken die Federarme 34 und 36 die Bremsbacken 20 bzw. 22 in allgemein bekannter Art und Weise von der Bremsscheibe 14 weg, um nach dem Lösen der Bremse das Lüftspiel zwischen den Bremsbacken und der Bremsscheibe wiederherzustellen.

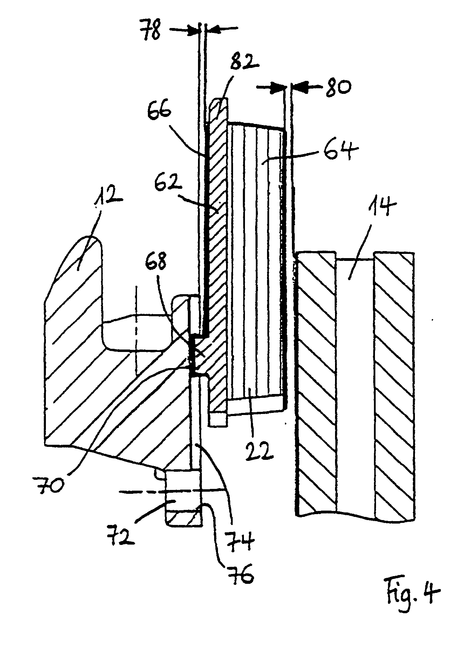

Die Figur 2 zeigt den Schwimmrahmen 12 mit den beiden Bremsbakken 22, wie sie etwa bei einer Verlängerung des Schnitts B-B in Figur 1 in Richtung des Pfeiles X zu sehen wäre, wobei die Bremsscheibe 14 und die Federarme 34 nicht dargestellt sind.

Wie in Figur 2 zu sehen, sind am Schwimmrahmen 12 vier Abstützungen 38, 40, 42 und 44 vorgesehen, in die die äußeren Bremsbacken 22 Umfangskräfte einleiten. Die vier Abstützungen 38, 40, 42 und 44 verlaufen parallel zueinander und parallel zur Mittelebene 46 des Schwimmrahmens, die senkrecht zur Zeichnungsebene steht. Die radial verlaufenden Mittelachsen 48 der Bremsbacken 22 schließen mit der Mittelebene 46 einen Winkel α ein.

Zwar sind die Bremsbacken 22 in sich symmetrisch, durch die Verkippung ihrer Mittelachse 48 gegen die Mittelebene 46 des Schwimmrahmens jedoch liegen an den Abstützungen 38, 40 und 42, 44 nicht jeweils in Umfangsrichtung der Bremsscheibe gegenüberliegende Kanten der Bremsbacken an. An der Abstützung 38 liegt die Kante 50 des linken Bremsbackens 22 an, an der Abstützung 40 liegt die Kante 54 an, je nach Fahrtrichtung. An der Abstützung 42 liegt die Kante 56 des rechten Bremsbackens 22 und an der Abstützung 44 dessen Kante 52 an. Je nach Drehrichtung der Bremsscheibe 14 werden die Umfangskräfte der Bremsbacken entweder über die Kante 50 in die Abstützung 38 und die Kante 56 in die Abstützung 42 eingeleitet, oder es werden die Umfangskräfte der Bremsbacken über die Kante 54 in die Abstützung 40 und die Kante 52 in die Abstützung 44 eingeleitet.

Da die Abstützungen 38, 40, 42 und 44 parallel zur Mittelebene 46 des Schwimmrahmens verlaufen, werden die Bremsbacken parallel zur Mittelebene 46 in Figur 2 von oben nach unten eingeschoben.

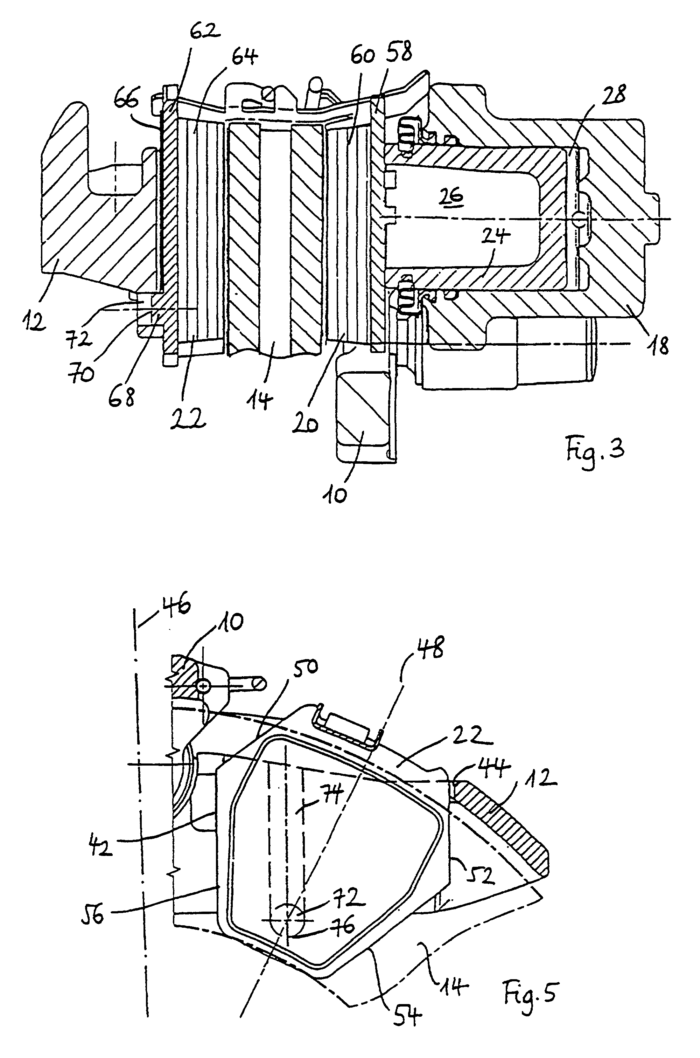

Die Erfindung wird nun erläutert anhand der Figur 3, die den Schnitt A-A durch die Scheibenbremse mit fertig montierten Bremsbacken 20 und 22 zeigt, und der Figur 4, die einen diesem Schnitt entsprechenden Ausschnitt zeigt, wobei der äußere Bremsbacken 22 gerade eingebaut wird.

Wie in Figur 3 zu sehen, bestehen die Bremsbacken 20 aus einer Bremsbackenrückenplatte 58, auf die ein Reibbelag 60 aufgebracht ist, der beim Bremsen gegen die Bremsscheibe 14 drückt. Entsprechend ist der Bremsbacken 22 aus einer Bremsbackenrückenplatte 62 mit einem Reibbelag 64 aufgebaut. Der Bremsbakken 22 weist rückwärtig eine weitgehend ebene Oberfläche 66 auf. Beim dargestellten Ausführungsbeispiel ist auf der Bremsbackenrückenplatte 62 eine Geräuschdämpfungsfolie (schwarz) aufgebracht, auf der eine Klebeschicht vorgesehen ist, um den Bremsbacken 22 am Schwimmrahmen 12 zu befestigen. Die Oberfläche 66 wird also durch die Geräuschdämpfungsfolie gebildet. Aus der Oberfläche 66 steht ein Vorsprung 68 hervor, dessen Oberfläche 70 parallel zu der ebenen Oberfläche 66 der Bremsbackenrückenplatte 62 verläuft. Der Vorsprung 68 greift im Einbauzustand in eine Bohrung bzw. Aussparung 72 im Schwimmrahmen. Der Vorsprung 68 hat hier kreisförmigen Querschnitt. Er bildet eine Rasteinrichtung, und die Bohrung 72 bildet eine dazu komplementäre Rasteinrichtung.

Beim Einbau wird der Bremsbacken, wie in Figur 4 zu sehen, in einer Nut 74 im Schwimmrahmen 12 geführt, die sich vom oberen Rand der Fläche, an die der Bremsbacken angelegt wird, parallel zur Mittelebene 46 und Mittelachse des Schwimmrahmens bis zu der Bohrung 72 erstreckt. Die Nut 74 geht dabei in die Bohrung 72 über und endet an der Wandung 76 der Bohrung, die als Anschlag wirkt. Stößt der Vorsprung 68 an den Anschlag 76 an, so kann dieser durch ein leichtes Drücken des Bremsbackens 22 nach links zum Eingreifen und ggf. hörbaren Verrasten mit dem Schwimmrahmen 12 gebracht werden. Die Tiefe der Nut 74 ist kleiner als die Höhe des Vorsprungs, die hier als Abstand zwischen der Stirnfläche 70 des Vorsprungs und der Fläche 66 definiert ist. Aus diesem Grund verbleibt beim Einführen des Vorsprungs 68 durch die Nut 74 ein Zwischenraum 78, so daß die Fläche 66 den Schwimmrahmen 12 beim Einbau nicht berührt. Die auf der Bremsbackenrückenplatte 62 befindliche Geräuschdämpfungsfolie mit Klebeschicht haftet daher nicht an dem Schwimmrahmen 12, bis der Vorsprung 68 in der Bohrung 72 verrastet. Die Tiefe des Eindringens des Vorsprungs 68 in die Bohrung wird dabei ebenfalls durch den Zwischenraum 78 bestimmt.

Die Höhe des Vorsprungs 68 und die Tiefe der Nut 74 sind ferner so gewählt, daß der Abstand 80 zwischen dem Reibbelag 64 des Bremsbackens 22 und der Bremsscheibe 14 beim Einführen des Bremsbackens 22 mit dem Vorsprung 68 entlang der Nut 74 kleiner ist als die Tiefe der Nut 74. Somit es ist unmöglich, daß der Bremsbacken zwischen dem Schwimmrahmen 12 und die Bremsscheibe 14 eingeführt wird, ohne daß der Vorsprung 68 in der Nut 74 geführt wird.

Der Bremsbacken 22 wird beim Einbau an seinem oberen Ende 82 angefaßt, und wegen des großen Abstands zwischen dem Vorsprung 68, der am Grund der Nut 74 entlang geführt wird, und dem oberen Ende 82 ergibt sich ein großer Hebel und damit eine stabile Führung des Bremsbackens 22 beim Einbau.

Die Figur 5 zeigt den Schnitt B-B in Figur 1, wobei die Bremsscheibe 14 strichpunktiert angedeutet ist und der Verlauf der Nut 74 strichpunktiert dargestellt ist. Insbesondere ist zu sehen, daß die Nut 74 parallel zu der Mittelebene 46 und -achse des Schwimmrahmens verläuft, und daß die Bohrung 72 kreisförmig ist. Neben seiner Funktion des Festlegens der Einbauorts der Bremsbackens 22 und der Befestigung desselben am Schwimmrahmen 12 kann der Vorsprung auch noch Teile der Umfangskraft, die nicht von den Abstützungen 42 und 44 (bzw. 38 und 40) aufgenommen werden, und die auch nicht durch den Reibschluß zwischen der Bremsbelagrückenplatte 62 (bzw. der Geräuschdämpfungsfolie) und der Anlagefläche des Schwimmrahmens 12 übertragen werden, an den Schwimmrahmen 12 weiterleiten.

Die Verankerung des Vorsprungs 68 in der Bohrung 72 ist derart formschlüssig, daß beispielsweise bei Bruch eines Federarmes 34 der Niederhaltefeder 32 der Bremsbacken 22 nicht aus seiner Einbaulage herauswandern könnte.

Die Nut 74 ist beim Einbau der Bremsbacken unter schwierigen Einbaubedingungen eine wesentliche Erleichterung.

Bei der erfindungsgemäßen Ausführungsform ist somit sowohl der ordnungsgemäße Einbau der äußere Bremsbacken sichergestellt als auch deren zuverlässige Befestigung am Schwimmrahmen 12.

Die Erfindung ist hier anhand einer Teilbelag-Scheibenbremse mit zwei äußeren Bremsbacken dargestellt worden, sie kann aber auch ohne weiteres bei einer Scheibenbremse mit nur einem äußeren Bremsbacken angewendet werden.

## Patentansprüche

1. Scheibenbremse mit
- einem Bremsträger (10), der an einem Fahrzeug befestigbar ist,
- einem Schwimmrahmen (12), der eine Bremsscheibe (14) der Bremse übergreift und am Bremsträger (10) geführt ist,
- zumindest einem Bremsbacken (22), der im Einbauzustand der Bremse auf der fahrzeugäußeren Seite der Bremsscheibe (14) am Schwimmrahmen (12) abgestützt ist,
- zumindest einem weiteren Bremsbacken (20), der im Einbauzustand der Bremse auf der fahrzeuginneren Seite der Bremsscheibe (14) am Bremsträger (10) gegen Bremskräfte abgestützt ist, und
- zumindest einem Betätigungskolben (24), der am Schwimmrahmen (12) angeordnet ist,
wobei der auf der fahrzeugäußeren Seite angeordnete Bremsbacken (22) auf seiner von der Bremsscheibe abgekehrten Seite einen Vorsprung (68) aufweist und der Schwimmrahmen (12) eine dazu komplementäre Vertiefung (72, 74),
**dadurch gekennzeichnet, daß**
die Vertiefung (74) in einer Richtung verläuft, in welcher der Bremsbacken (22) beim Einbau der Bremse eingeführt wird, und eine Tiefe aufweist, die geringer als die Höhe des Vorsprungs (68) ist, wobei am Ende der Vertiefung (74) eine weitere Vertiefung (72) zur Aufnahme des Vorsprunges (68) vorgesehen ist.

2. Scheibenbremse mit
- einem Bremsträger (10), der an einem Fahrzeug befestigbar ist,
- einem Schwimmrahmen (12), der eine Bremsscheibe (14) der Bremse übergreift und am Bremsträger (10) geführt ist,
- zumindest einem Bremsbacken (22), der im Einbauzustand der Bremse auf der fahrzeugäußeren Seite der Bremsscheibe (14) am Schwimmrahmen (12) abgestützt ist,
- zumindest einem weiteren Bremsbacken (20), der im Einbauzustand der Bremse auf der fahrzeuginneren Seite der Bremsscheibe (14) am Bremsträger (10) gegen Bremskräfte abgestützt ist, und
- zumindest einem Betätigungskolben (24), der am Schwimmrahmen (12) angeordnet ist,
wobei der fahrzeugaußenseitig angeordnete Bremsbacken (22) auf seiner von der Bremsscheibe (14) abgekehrten Seite eine Vertiefung aufweist und der Schwimmrahmen (12) einen dazu komplementären Vorsprung, der in die Vertiefung eingreift,
**dadurch gekennzeichnet, daß**
die Vertiefung in eine Richtung verläuft, in welche der Bremsbacken (22) beim Einbau der Bremse eingeführt wird, und eine Tiefe aufweist, die geringer als die Höhe des Vorsprungs ist, wobei am Ende der Vertiefung eine weitere Vertiefung zur Aufnahme des Vorsprunges vorgesehen ist.

3. Scheibenbremse nach einem der Ansprüche 1 oder 2,
**dadurch gekennzeichnet, daß**
die weitere Vertiefung (72) einen Anschlag (76) für den Vorsprung (68) bildet.

4. Scheibenbremse nach einem der Ansprüche 1 bis 3,
**dadurch gekennzeichnet, daß**
der Abstand (80) zwischen der zur Bremsscheibe (14) weisenden Oberfläche des fahrzeugäußeren Bremsbackens (22) und der Bremsscheibe (14) während eines Entlangführens des Vorsprungs (68) des Bremsbackens (22) in der Vertiefung (74) kleiner als die Tiefe der Vertiefung (74) ist.

5. Scheibenbremse nach einem der Ansprüche 1 bis 4,
**dadurch gekennzeichnet, daß**
der Bremsbacken (22) auf seiner von der Bremsscheibe (14) abgekehrten Seite mit einer Geräuschsdämpfungsfolie versehen ist.

6. Scheibenbremse nach Anspruch 5,
**dadurch gekennzeichnet, daß**
der Höhenunterschied zwischen einer Oberfläche (70) des Vorsprungs (68) und einer der Bremsscheibe (14) abgekehrten Oberfläche der Geräuschdämpfungsfolie größer ist als die Tiefe der Vertiefung (74).

7. Scheibenbremse nach einem der Ansprüche 1 bis 6,
**dadurch gekennzeichnet, daß**
der Vorsprung (68) möglichst weit von dem Bereich (82) des ersten Bremsbackens (22) beabstandet ist, der während des Einbaus des Bremsbackens (22) angefaßt wird.

8. Scheibenbremse nach einem der Ansprüche 1 bis 7,
**dadurch gekennzeichnet, daß**
auf jeder Seite der Bremsscheibe (14) zwei voneinander getrennte Bremsbacken (20, 22) angeordnet sind, und daß zumindest ein Paar Betätigungskolben (24) vorgesehen ist, die am Schwimmrahmen (12) symmetrisch in bezug auf eine axiale Mittelebene des Bremsträgers (10) angeordnet sind.

9. Scheibenbremse nach einem der Ansprüche 1 bis 8,
**dadurch gekennzeichnet, daß**
der Vorsprung (68) an oder nahe einer Kante des Bremsbackens ausgeformt ist, die beim Einbauen des Bremsbackens in die Bremse zuerst in die Bremse eingeführt wird.

10. Bremsbacken für eine Scheibenbremse, **gekennzeichnet durch** eine Vertiefung auf seiner der Bremsscheibe abgekehrten Seite, die so ausgebildet ist, dass sie beim Einbauen des Bremsbackens in die Bremse einen Vorsprung an einem Bauteil der Bremse aufnimmt, wobei die Vertiefung eine Tiefe aufweist, die kleiner ist als die Höhe des Vorsprungs, und in eine Richtung verläuft, in welcher der Bremsbacken (22) beim Einbau in die Bremse eingeführt wird, und wobei am Ende der Vertiefung eine weitere Vertiefung vorgesehen ist, welche zur Aufnahme des Vorsprungs ausgebildet ist.

11. Verwendung eines Bremsbackens zum Einbau in eine Scheibenbremse, wobei der Bremsbacken einen Vorsprung (68) aufweist, derart, dass der Bremsbacken (22) beim Einbau in eine erste Vertiefung (74) an einem Bauteil der Bremse eingeführt wird und der Bremsbacken (22) in der Vertiefung (74) verschoben wird, bis er in eine weitere Vertiefung (72) am Ende der ersten Vertiefung (74) eingreift.

## Claims

1. Disk brake comprising
- a brake anchor plate (10) adapted to be fastened to a vehicle;
- a floating frame (12) which engages over a brake disk (14) of the brake and is guided on the brake anchor plate (10);
- at least one brake shoe (22) which in the installed state of the brake is supported against the floating frame (12) at the side of the brake disk (14) directed towards the outside of the vehicle;
- at least one further brake shoe (20) which in the installed state of the brake is supported counter to braking forces against the brake anchor plate (10) at the side of the brake disk (14) directed towards the inside of the vehicle, and
- at least one operating piston (24) disposed on the floating frame (12),
wherein the brake shoe (22) which is disposed at the side directed towards the outside of the vehicle has a projection (68) at its side averted from the brake disk and the floating frame (12) has a recess (72, 74) complementary thereto,
**characterized in that**
the recess (74) extends in a direction in which the brake shoe (22) is introduced during installation of the brake and has a depth smaller than the height of the projection (68), wherein at the end of the recess (74) a further recess (72) is provided for receiving the projection (68).

2. Disk brake comprising
- a brake anchor plate (10) adapted to be fastened to a vehicle,
- a floating frame (12) which engages over a brake disk (14) of the brake and is guided on the brake anchor plate (10),
- at least one brake shoe (22) which in the installed state of the brake is supported against the floating frame (12) at the side of the brake disk (14) directed towards the outside of the vehicle,
- at least one further brake shoe (20) which in the installed state of the brake is supported counter to braking forces against the brake anchor plate (10) at the side of the brake disk (14) directed towards the inside of the vehicle, and
- at least one operating piston (24) disposed on the floating frame (12),
wherein the brake shoe (22) which is disposed at the side directed towards the outside of the vehicle has a recess at its side averted from the brake disk (14) and the floating frame (12) has a projection that is complementary thereto and engages into the recess
**characterized in that**
the recess extends in a direction, in which the brake shoe (22) is introduced during installation of the brake, and has a depth smaller than the height of the projection,
wherein at the end of the recess a further recess is provided for receiving the projection.

3. The disk brake according to one of claims 1 or 2, **characterized in that**
the further recess (72) forms a stop (76) for the projection (68).

4. The disk brake according to one of claims 1 to 3, **characterized in that**
the distance (80) between the surface of the vehicle outer brake shoe (22) directed towards the brake disk (14) and the brake disk (14) during guidance of the projection (68) of the brake shoe (22) along and in the recess (74) is smaller than the depth of the recess (74).

5. The disk brake according to one of claims 1 to 4, **characterized in that**
at its side averted from the brake disk (14) the brake shoe (22) is provided with a noise-damping foil.

6. The disk brake according to claim 5,
**characterized in that**
the difference in height between a surface (70) of the projection (68) and a surface of the noise-damping foil averted from the brake disk (14) is greater than the depth of the recess (74).

7. The disk brake according to one of claims 1 to 6, **characterized in that**
the projection (68) is spaced as far as possible from the region (82) of the first brake shoe (22) that is grasped during installation of the brake shoe (22).

8. The disk brake according to one of claims 1 to 7, **characterized in that**
two brake shoes (20, 22) separate from each other are disposed on either side of the brake disk (14), and that at least one pair of operating pistons (24) are provided that are disposed on the floating frame (12) symmetrically in relation to an axial centre plane of the brake anchor plate (10).

9. The disk brake according to one of claims 1 to 8,
**characterized in that**
the projection (68) is formed on or close to an edge of the brake shoe which, during installation of the brake shoe in the brake, is introduced first into the brake.

10. Brake shoe for a disk brake, **characterized by** a recess at its side averted from the brake disk that is designed in such a manner that, when the brake shoe is installed in the brake, it accommodates a projection on a component of the brake,
wherein the recess has a depth smaller than the height of the projection and extends in a direction in which the brake shoe (22) is introduced during installation in the brake, and wherein at the end of the recess a further recess is provided that is designed to receive the projection.

11. Use of a brake shoe for installation in a disc brake, wherein the brake shoe comprises a projection (68) in such a manner that during installation into a first recess (74) the brake shoe (22) is inserted at a component of the brake and the brake shoe (22) is moved in the recess (74) until it engages in a further recess (72) at the end of the first recess (74).

## Revendications

1. Frein à disque comprenant
- un support de frein (10) qui peut être fixé à un véhicule,
- un étrier flottant (12) qui chevauche un disque (14) du frein et est guidé sur le support (10),
- au moins une mâchoire (22) qui, à l'état monté du frein et du côté du disque (14) disposé sur le côté extérieur du véhicule, est en appui sur l'étrier flottant (12),
- au moins une autre mâchoire (20) qui, à l'état monté du frein et du côté du disque (14) disposé sur le côté intérieur du véhicule, est en appui sur le support de frein (10) à l'encontre des forces de freinage, et
- au moins un piston d'actionnement (24) qui est disposé sur l'étrier flottant,
la mâchoire (22) disposée du côté extérieur du véhicule présentant sur sa face opposée au disque une saillie (68) et l'étrier flottant (12) affichant un évidement (72, 74) complémentaire à ladite saillie,
**caractérisé en ce que**
l'évidement (74) s'étend dans un sens dans lequel la mâchoire (22) est introduite lors du montage du frein, et présente une profondeur qui est inférieure à la hauteur de la saillie (68), un autre évidement (72) destiné au logement de la saillie (68) étant prévu à l'extrémité dudit évidement (74).

2. Frein à disque comprenant
- un support de frein (10) qui peut être fixé à un véhicule,
- un étrier flottant (12) qui chevauche un disque (14) du frein et est guidé sur le support (10),
- au moins une mâchoire (22) qui, à l'état monté du frein et du côté du disque (14) disposé sur le côté extérieur du véhicule, est en appui sur l'étrier flottant (12),
- au moins une autre mâchoire (20) qui, à l'état monté du frein et du côté du disque (14) disposé sur le côté intérieur du véhicule, est en appui sur le support de frein (10) à l'encontre des forces de freinage, et
- au moins un piston d'actionnement (24) qui est disposé sur l'étrier flottant,
la mâchoire (22) disposée du côté extérieur du véhicule présentant sur sa face opposée au disque (14) une saillie et l'étrier flottant (12) affichant un évidement (72, 74) complémentaire à ladite saillie qui vient en prise dans l'évidement
**caractérisé en ce que**
l'évidement s'étend dans un sens dans lequel la mâchoire (22) est introduite lors du montage du frein, et présente une profondeur qui est inférieure à la hauteur de la saillie (68), un autre évidement destiné au logement de la saillie étant prévu à l'extrémité du premier évidement.

3. Frein à disque selon l'une des revendications 1 ou 2,
**caractérisé en ce que**
l'autre évidement (72) forme une butée (76) pour la saillie (68) .

4. Frein à disque selon l'une des revendications 1 à 3,
**caractérisé en ce que**
l'espacement (80) entre la surface (tournée vers le disque (14)) de la mâchoire (22) disposée du côté extérieur du véhicule et le disque (14) est, lors d'un déplacement de la saillie (68) de la mâchoire (22) dans et le long de l'évidement (74), plus faible que la profondeur de l'évidement (74).

5. Frein à disque selon l'une des revendications 1 à 4,
**caractérisé en ce que**
la mâchoire (22) est pourvue sur sa face opposée au disque (14) d'une feuille anti-bruit.

6. Frein à disque selon la revendication 5,
**caractérisé en ce que**
la différence de hauteur entre une surface (70) de la saillie (68) et une surface (opposée au disque (14)) de la feuille anti-bruit est plus importante que la profondeur de l'évidement (74).

7. Frein à disque selon l'une des revendications 1 à 6,
**caractérisé en ce que**
la saillie (68) est située le plus loin possible de l'extrémité supérieure (82) de la première mâchoire (22), par laquelle extrémité on tient la mâchoire (22) pendant son montage.

8. Frein à disque selon l'une des revendications 1 à 7,
**caractérisé en ce que**
deux mâchoires (20, 22) séparées l'une de l'autre sont disposées de chaque côté du disque (14), et **en ce qu'**il est prévu au moins une paire de pistons d'actionnement (24) disposés symétriquement sur l'étrier flottant (12) par rapport à un plan médian axial du support de frein (10).

9. Frein à disque selon l'une des revendications 1 à 8,
**caractérisé en ce que**
la saillie (68) est formée sur ou près d'un bord de la mâchoire, lequel bord est tout d'abord introduit dans le frein lors du montage de la mâchoire dans le frein.

10. Mâchoire pour frein à disque, **caractérisée par** un évidement ménagé sur sa face opposée au disque, lequel évidement est formé de telle sorte qu'il permet, lors du montage de la mâchoire dans le frein, le logement d'une saillie aménagée sur une pièce du frein, l'évidement présentant une profondeur qui est inférieure à la hauteur de la saillie et s'étendant dans un sens dans lequel la mâchoire (22) est introduite dans le frein lors du montage, et un autre évidement formé de manière à permettre le logement de la saillie étant prévu à l'extrémité du premier évidement.

11. Utilisation d'une mâchoire à monter dans un frein à disque, la mâchoire présentant une saillie (68) de telle sorte que la mâchoire (22) est introduite dans un premier évidement (74) ménagé dans une pièce du frein et que la mâchoire (22) est déplacée dans l'évidement (74) jusqu'à ce qu'elle vienne en prise dans un autre évidement (72) après avoir atteint l'extrémité du premier évidement (74).
